# EUROPEAN PATENT SPECIFICATION

(11) **EP 3 017 708 B1**
(45) Date of publication and mention of the grant of the patent: **02.05.2018**
(21) Application number: 14190293.2
(22) Date of filing: 24.10.2014
(51) Int. Cl.: A23L 27/30, A23L 2/60

(54) **Sweetening composition**
Süßungszusammensetzung
Composition d'édulcorant

(43) Date of publication of application: 11.05.2016
(73) Proprietor: Red Bull GmbH, 5330 Fuschl am See (AT)
(72) Inventor: NACHBAGAUER, Josef, 5400 Hallein (AT); GANSCH, Heidemarie, 3241 Kirnberg an der Mank (AT); GOEHLER, Lydia, 5310 Mondsee (AT); HABRING, Sabrina, 4873 Frankenburg (AT); PABI, Nicole, 5330 Fuschl am See (AT)
(74) Representative: Metten, Karl-Heinz

(56) References cited:
- EP-A1- 2 486 806
- WO-A1-2011/094423
- WO-A2-2012/073121
- US-A1- 2011 091 637

## Description

The present invention relates to sweetening compositions, their use for sweetening and the preparation of beverages as well as to beverages comprising said sweetening compositions. Common soft drinks usually contain significant amounts of natural sugars such as sucrose, glucose, fructose or mixtures thereof. The caloric content of these natural sugars is in the range from 3.6 to 3.9 kcal/g. Many attempts have been made to reduce the caloric content of beverages such as soft drinks. In some instances natural sugars have been replaced by artificial sweeteners such as aspartame or acesulfame potassium. These artificial sweeteners usually are synthetic compounds having no resemblance to the structure of natural sugars. Another supplement to said natural sugars are sucralose, which is a chlorinated carbohydrate, and steviol glycosides. Both of these sweeteners are experiencing a still increasing demand due to their very low caloric content. Moreover, some steviol glycosides have a sweetening power which is about 240 to 400 times that of the natural sugar sucrose. Steviol glycosides are derived from extracts of the leaves of the stevia plant (*Stevia rebaudiana Bertoni*)*.* The four major steviol glycosides found in the leaves of the stevia plant are stevioside (about 5 to 10 wt-%), rebaudioside A (about 2 to 4 wt-%), rebaudioside C (about 1 to 2 wt-%) and dulcoside A (about 0.5 to 1 wt-%). Further steviol glycosides which are found in the extract of the leaves of the stevia plant, however in rather minute quantities, are rebaudioside B, rebaudioside D and rebaudioside E. The common aglycon of all steviol glycosides is steviol which belongs to the class of diterpenes.

Unfortunately, beverages sweetened with steviol glycosides suffer some significant drawbacks which for many consumers outway the high caloric content of conventional beverages. Steviol glycosides are known to cause a bitter and/or licorice-like aftertaste, in some instances also a metallic aftertaste. In addition, the sweet sensation is retarded to a significant extent, that is, the sweetening has a significant onset time. In some cases steviol glycosides are also responsible for a so-called blunt or dry mouthfeel.

Many attempts have been made to overcome the afore-mentioned shortcomings. For example, according to WO 2012/073121 A2 the bitter aftertaste of steviol glycosides shall be decreased or eliminated by the reduction or elimination of rebaudioside C or dulcoside A or both from stevia compositions. However, it has been found that the reduction of rebaudioside C and/or dulcoside A as such does not guarantee a reduction in bitter aftertaste. Moreover, even with stevia compositions being void of rebaudioside C or dulcoside A consumers experience a slow onset and sometimes even a longer duration of the sweetness sensation.

In WO 2008/147726 it is described that a more sugar-like flavor profile shall be obtained by sweetener compositions comprising at least a) one sweetness enhancer such as urea or thiourea, b) at least one sweetener comprising a carbohydrate sweetener, a natural high-potency sweetener, a synthetic high-potency sweetener or a combination thereof such as rebaudioside compounds, sucralose, aspartame or acesulfame potassium, and c) at least one sweet taste improving composition selected from the group consisting of carbohydrates, polyols, amino acids, or mixtures thereof.

New sweetened beverage formulations which do not exhibit a bitter aftertaste shall be obtained according to EP 2 474 240 A1 by use of rebaudioside D and an acidulant comprising at least lactic acid and one or both of tartaric acid and citric acid, and no phosphoric acid. From WO 2011/146463 A2 it can be derived that the bitterness in an otherwise sweet composition containing steviol glycosides shall be masked by incorporating an increased amount, relative to naturally occurring compositions, of rebaudioside D.

EP 2 486 806 A1 discloses a low-calorie orange juice drink which makes use of a mixture of 84 wt-% rebaudioside A and 16 wt-% rebaudioside D. Different from a low-calorie orange juice having been sweetened with a conventional stevia extract a pleasant taste similar to sucrose, a full mouthfeel, and no bitterness and no aftertaste could be observed during sensory evaluation. A similar outcome was observed for a zero-calorie carbonated beverage.

According to WO 2008/112967 A1 the metallic aftertaste experienced with beverages containing conventional steviol glycosides shall be masked by the presence of anisic acid.

And, in WO 2012/109585 A1 it is disclosed that attributes such as bitterness, sweet aftertaste and licorice flavor of steviol glycosides may be overcome by sweetening compositions comprising a blend of rebaudioside A, rebaudioside B and steviol glycosides, in particular when the ratio of rebaudiaside B to total steviol glycosides in the blend ranges from 0.5 % to about 50 % and more preferably from about 5 % to about 40 %.

The afore-mentioned drawbacks associated with the use of steviol glycosides are still not overcome to a satisfactory extent. It is still desirable to obtain beverages having a much improved sweetness and aroma profile.

Accordingly, it has been an object of the present invention to provide low-calorie beverages having been sweetened by use of steviol glycosides which, however, do not suffer from a bitter or licorice-like aftertaste and/or which do not cause a blunt or dry mouthfeel and/or which do not exhibit a delayed onset of the sensation of sweetness.

The problems underlying the present invention have surprisingly been solved by a sweetening composition comprising, in particular consisting of, rebaudioside A, rebaudioside B and rebaudioside D wherein, based on the total weight of rebaudioside A, rebaudioside B and rebaudioside D,
rebaudioside A is present in an amount in the range from 85.0 to 95.0 wt-%, rebaudioside B is present in an amount in the range from 0.2 to 1.2 wt-%, and rebaudioside D is present in an amount in the range from 4.8 to 13.8 wt-%.

In a preferred embodiment of the sweetening composition of the present invention
rebaudioside A is present in an amount in the range from 86.0 to 94.3 wt-%, rebaudioside B is present in an amount in the range from 0.3 to 0.9 wt-%, and rebaudioside D is present in an amount in the range from 5.4 to 13.1 wt-%.

According to a first particularly preferred embodiment sweetening compositions having a very good mouthfeel, essentially no bitter aftertaste and no delayed onset are characterized in that, based on the total weight of rebaudioside A, rebaudioside B and rebaudioside D, rebaudioside A is present in an amount in the range from 90.5 to 94.0 wt-%, rebaudioside B is present in amount in the range from 0.2 to 1.0 wt-% and rebaudioside D is present in amount in the range from 5.8 to 8.5 wt-%.

According to second particularly preferred embodiment the described effects are also obtained by a sweetening composition in which, based on the total weight of rebaudioside A, rebaudioside B and rebaudioside D, rebaudioside A is present in an amount in the range from 85.0 to 90.5 wt-%,
rebaudioside B is present in an amount in the range from 0.5 to 1.0 wt-% and
rebaudioside D is present in an amount in the range from 9.0 to 14.0 wt-%.

According to a third particularly preferred embodiment the described effects are also obtained by a sweetening composition in which, based on the total weight of rebaudioside A, rebaudioside B and rebaudioside D, rebaudioside A is present in an amount in the range from 90.9 to 94.4 wt-%,
rebaudioside B is present in amount in the range from 0.2 to 0.5 wt-% and
rebaudioside D is present in amount in the range from 5.4 to 8.6 wt-%.

Furthermore, it has been found that those sweetening compositions of the present invention exhibit superior results in terms of improved aroma profile and improved aftertaste in which said composition does not contain more rebaudioside C or more rebaudioside E or more rebaudioside F or more stevioside (13-[(2-O-beta-D-Glucopyranosyl-alpha-D-glucopyranosyl)oxy]kaur-16-en-18-oic acid beta-D-glucopyranosyl ester) or more dulcoside or more rubusoside or more steviolbioside (13-[(2-O-β-D-Glucopyranosyl-β-D-glucopyranosyl)oxy]kaur-16-en-18-oic acid) or more of any other steviol glycoside different from rebaudioside A to F, stevioside, dulcoside, rubusoside and steviolbioside than rebaudioside B
or
wherein said composition contains less rebaudioside C or less rebaudioside E or less rebaudioside F or less stevioside or less dulcoside or less rubusoside or less steviolbioside or less of any other steviolglycoside different from rebaudioside A to F, stevioside, dulcoside, rubusoside and steviolbioside than rebaudioside B,
or preferably
wherein said composition does not contain more of at least two compounds selected from the group consisting of rebaudioside C, rebaudioside E, rebaudioside F, stevioside, dulcoside, rubusoside, steviolbioside and of any other steviolglycoside different from rebaudioside A to F, stevioside, dulcoside, rubusoside and steviolbioside than rebaudioside B
or preferably
wherein said composition contains less of at least two compounds selected from the group consisting of rebaudioside C, rebaudioside E, rebaudioside F, stevioside, dulcoside, rubusoside, steviolbioside and of any other steviolglycoside different from rebaudioside A to F, stevioside, dulcoside, rubusoside and steviolbioside than rebaudioside B
or more preferably
wherein said composition does not contain more of rebaudioside C, rebaudioside E, rebaudioside F, stevioside, dulcoside, rubusoside and steviolbioside and of any other steviolglycoside different from rebaudioside A to F, stevioside, dulcoside, rubusoside and steviolbioside than rebaudioside B
or more preferably
wherein said composition contains less of rebaudioside C, rebaudioside E, rebaudioside F, stevioside, dulcoside, rubusoside and steviolbioside and of any other steviolglycoside different from rebaudioside A to F, stevioside, dulcoside, rubusoside and steviolbioside than rebaudioside B.

To this end, also those sweetening compositions are preferred in terms of improved aroma profile and improved aftertaste in which said composition, based on the total weight of rebaudioside A, rebaudioside B and rebaudioside D, does not contain more than 0.1 wt.-% rebaudioside C, rebaudioside E, rebaudioside F, stevioside, dulcoside, rubusoside or steviolbioside or more of any other steviolglycoside different from rebaudioside A to F, stevioside, dulcoside, rubusoside and steviolbioside,
or
wherein said composition, based on the total weight of rebaudioside A, rebaudioside B and rebaudioside D, contains less than 0.1 wt.-% rebaudioside C or less than 0.1 wt.-% rebaudioside E or less than 0.1 wt.-% rebaudioside F or less than 0.1 wt.-% stevioside or less than 0.1 wt.-% dulcoside or less than 0.1 wt.-% rubusoside or less than 0.1 wt.-% steviolbioside or less than 0.1 wt.-% of any other steviolglycoside different from rebaudioside A to F, stevioside, dulcoside, rubusoside and steviolbioside,
or preferably
wherein said composition, based on the total weight of rebaudioside A, rebaudioside B and rebaudioside D, does not contain more than 0.1 wt.-% of at least two compounds selected from the group consisting of rebaudioside C, rebaudioside E, rebaudioside F, stevioside, dulcoside, rubusoside, steviolbioside and of any other steviolglycoside different from rebaudioside A to F, stevioside, dulcoside, rubusoside and steviolbioside or preferably
wherein said composition, based on the total weight of rebaudioside A, rebaudioside B and rebaudioside D, contains less than 0.1 wt.-% of at least two compounds selected from the group consisting of rebaudioside C, rebaudioside E, rebaudioside F, stevioside, dulcoside, rubusoside, steviolbioside and of any other steviolglycoside different from rebaudioside A to F, stevioside, dulcoside, rubusoside and steviolbioside
or more preferably
wherein said composition, based on the total weight of rebaudiaside A, rebaudioside B and rebaudioside D, does not contain more than 0.1 wt.-% of rebaudioside C, rebaudioside E, rebaudioside F, stevioside, dulcoside, rubusoside and steviolbioside and of any other steviolglycoside different from rebaudioside A to F, stevioside, dulcoside, rubusoside and steviolbioside
or more preferably
wherein said composition, based on the total weight of rebaudiaside A, rebaudioside B and rebaudioside D, contains less than 0.1 wt.-% of rebaudioside C, rebaudioside E, rebaudioside F, stevioside, dulcoside, rubusoside and steviolbioside and of any other steviolglycoside different from rebaudioside A to F, stevioside, dulcoside, rubusoside and steviolbioside. Those compositions are also preferred which do not contain rebaudioside C, rebaudioside E, rebaudioside F, stevioside, dulcoside, rubusoside and steviolbioside and also not any other steviolglycoside different from rebaudioside A to F, stevioside, dulcoside, rubusoside and steviolbioside.

Due to the sweetening power of rebaudiaside compounds the sweetening compositions of the present invention can be void of any sweet-tasting natural carbohydrates and/or any sweet-tasting sugar alcohols. However, it has surprisingly been found that with some beverages the sweetening composition of the present invention furnishes even better results in particular in terms of mouthfeel, aftertaste and aroma profile if it comprises at least one natural sweet-tasting carbohydrate, in particular a natural sweet-tasting monosaccharide and/or disaccharide, and/or at least one sweet-tasting sugar alcohol, preferably at least one natural sweet-tasting carbohydrate and no sweet-tasting sugar alcohol.

Accordingly, the problem of the present invention has also been solved by a sweetening composition comprising rebaudioside A, rebaudioside B and rebaudioside D, as described previously, in addition to at least one natural sweet-tasting carbohydrate, in particular a natural sweet-tasting monosaccharide and/or disaccharide, and/or at least one sweet-tasting sugar alcohol, and which is essentially free of rebaudioside C, rebaudioside E, rebaudioside F, stevioside, dulcoside, rubusoside, steviolbioside and of any other steviolglycoside different from rebaudioside A to F, stevioside, dulcoside, rubusoside or steviolbioside, or, preferably, which is essentially free of rebaudioside C, rebaudioside E, rebaudioside F, stevioside, dulcoside, rubusoside, steviolbioside and of any other steviolglycoside different from rebaudioside A to F, stevioside, dulcoside, rubusoside and steviolbioside.

Steviolglycosides such as rebaudioside A, rebaudioside B, rebaudioside D, rebaudioside C, rebaudioside E, rebaudioside F, stevioside, dulcoside, rubusoside and steviolbioside can be detected/determined according to HPLC-UV as specified in JECFA (2010) Steviol Glycosides, FAO JECFA Monograph 10, FAO, Rome.

With the present invention it is also possible to not only make use of highly purified product samples of individual rebaudiosides A, B and D, but to also employ crude product samples of rebaudiosides A, B and D. The compositions of the present invention can for example also contain residual plant components or residual moisture. However, it is preferred to make use of purified rebaudioside A, B and D starting components. According to the present invention 100 g of such purified rebaudioside may in some embodiments contain about 0,1 g or less of other steviol glycosides as described herein.

The composition of the present invention preferably contains at least one natural sweet-tasting carbohydrate, in particular a natural sweet-tasting monosaccharide and/or disaccharide, and no sweet-tasting sugar alcohol.

Exemplary, sweet-tasting natural monosaccharides are selected from the group consisting of fructose, glucose, mannose, rhamnose, xylose, tagatose, and galactose or mixtures thereof. Exemplary sweet-tasting naturally disaccharides are selected from the group consisting of sucrose, lactose, and maltose or mixtures thereof. And, exemplary sweet-tasting sugar alcohols are selected from the group consisting of erythritol, glycerol, lactitol, maltitol, mannitol, sorbitol, xylitol, and galactitol or mixtures thereof. It has also surprisingly been found that sweetening compositions of the present invention or beverages of the present invention which also contain at least one sweet-tasting monosaccharide, preferably glucose, and/or at least one sweet-tasting disaccharide, preferably sucrose, furnish or have, resp., an improved aroma profile and a rather natural sweetness sensation as obtained when using sweet-tasting carbohydrates alone in typical amounts furnishing a caloric content of from 3.6 to 3.9 kcal/g.

Sweetening compositions which further comprise at least one thickening agent and/or at least one organic acid and/or at least one inorganic acid, in particular phosphoric acid, have been found to provide beverages having an improved mouthfeel and/or freshness. The improvement in mouthfeel with the compositions of the present invention can also be caused by the use of thickening agents. Alternatively, or in combination, physiologically acceptable salts of the aforementioned acids can be used as well. Preferred results in terms of aroma development and perception of sweetness can be obtained when fumaric acid, gluconic acid, glycolic acid, mandelic acid, oxalic acid and salicylic acid, lactic acid, tartaric acid, anisic acid, malic acid or citric acid or a mixture of these acids is used. Preferably malic acid or citric acid or a mixture of malic acid and citric acid are present in the sweetening compositions or the beverages of the present invention. Here, it has been found to be advantageous to make us of two organic acids, preferably malic acid and citric acid. The relative amounts of the organic acids, in particular of a pair of organic acids, can be varied in wide ranges. According to one preferred embodiment these two organic acids, in particular malic acid and citric acid, are employed in a 1:1 weight ratio. Moreover, with malic acid it has surprisingly been found that with the sweetening compositions of the present invention a mild aroma profile can be obtained. Moreover, it has also been surprisingly found that by concomitant use of malic acid and another organic acid, in particular, citric acid a rather fruity and fresh taste impression can be obtained. Both malic acid and citric acid, alone and in combination, are suited to improved the sweetness and acid profile of beverages containing the sweetening compositions of the present invention and are also able to generate a pleasant development of the overall aroma profile and also of the sweetness sensation.

Suitable thickening agents are selected from the group consisting of starch, starch-based thickeners, xanthan, pectins, agar agar, carrageenan, alginic acid and locust bean gum or mixtures thereof. Suitable organic acids are selected from the group consisting of citric acid, malic acid, tartaric acid, fumaric acid, gluconic acid, lactic acid, glycolic acid, mandelic acid, oxalic acid and salicylic acid or mixtures thereof.

The sweetening compositions of the present invention can also be provided with at least one flavoring ingredient. Suitable flavoring ingredients are selected from the group consisting of galangal, cocoa, cinnamon, lemon, lemon juice concentrate, coca leaf, orange, orange oil, banana, grape, pear, pineapple, bitter almond, corn mint, pine, cardamom, mace, clove, lime, lime oil, nutmeg, nutmeg oil, mustard seeds, mustard seed oil, caramel, rosemary, pepper, honey, ginger, vanilla, licorice, licorice extract, cola nut,cola nut extract or mixtures thereof. The sweetening compositions of the present invention in one embodiment can also comprise at least one artificial sweetener, in particular aspartame, sucralose, neotame, alitame, glucin, acesulfame potassium, cyclamate, saccharine or mixtures thereof.

In particular if the sweetening composition of the present invention shall be used for a preparation of an energy drink it can also contain taurine and/or caffeine. Accordingly, the sweetening compositions of the present invention can as such also be used for energy drinks.

The sweetening compositions of the present invention can also comprise, for example when used with energy drinks, further ingredients such as sodium citrate, glucoronolactone, inositol, at least one vitamin, e.g. niacin, pantothenic acid, vitamin B6, vitamin B12, riboflavin, caustic caramel, caustic sulfite caramel, ammonia caramel, sulfite ammonia caramel or ascorbic acid or mixtures thereof. The sweetening composition of the present invention can be used for sweetening beverages, in particular soft drinks or energy drinks. The beneficial effects coming along with the use of the sweetening composition of the present invention can in particular also be accomplished with carbonated beverages.

The sweetening compositions of the present invention as well as the beverages of the present invention, e.g. soft drinks or energy drinks, in one embodiment can also comprise common additives such as amino acids, coloring agents, bulking agents, modified starches, texturizers, preservatives, antioxidants, emulsifiers, stabilizers, gelling agents or arbitrary mixtures thereof.

Interestingly, the sweetening compositions of the present invention are also suited to prepare precursor compositions in the form of a syrup which can be easily stored and transported and can be used on demand for the preparation of in particular carbonated beverages.

The problem underlying the present invention has also been solved by a beverage comprising the sweetening composition of the present invention.

Suitable beverages according to preferred embodiments are characterized in that rebaudioside A, B and D in combination are present in the beverage in a concentration in the range from 0.01 to 1.0 g/l, preferably from 0.05 to 0.75 g/l and more preferably from 0.1 to 0.6 g/l ( determined at ambient temperature and 1 bar). According to another preferred embodiment rebaudioside A, B and D, in combination, are present in beverages, which are void of natural sweet-tasting carbohydrates and/or sweet-tasting sugar alcohols, in particular void of both, in a concentration in the range from 0.05 to 0.5 g/l, preferably from 0.075 to 0.3 g/l and more preferably from 0.1 to 0.175 g/l. And, according to still another preferred embodiment rebaudioside A, B and D, in combination, are present in beverages, which contain at least one natural sweet-tasting carbohydrate and/or at least one sweet-tasting sugar alcohol, in particular at least one natural sweet-tasting carbohydrate but no sweet-tasting sugar alcohol, in a concentration in the range from 0.075 to 0.5 g/l, preferably from 0.1 to 0.4 g/l and more preferably from 0.18 to 0.3 g/l.

Beverages of the present invention having an improved mouthfeel and also an improved aroma profile preferably contain sweet-tasting natural carbohydrates and/or sweet-tasting sugar alcohols. In a preferred embodiment the sweet-tasting natural carbohydrates and the sweet-tasting sugar alcohols are present in combination in the beverages of the present invention in a concentration not above 40 g/l, preferably in the range from 5 g/l to 35 g/l and more preferably in the range from 10 g/l to 25 g/l (determined at ambient temperature and 1 bar). Ambient temperature in the meaning of the present invention shall mean room temperature, i.e. a temperature in the range from 20°C to 25°C.

The problem of the present invention has also been solved by a method for preparing a beverage comprising the steps of a) providing a sweetening composition according to the present invention, b) providing water and c) mixing components provided under a) and b).

In case a carbonated beverage shall be prepared according to the process of the present invention a carbonating step (step d) has to be added to said process. According to another embodiment, the process of the present invention can further comprise the step of adding at least one thickening agent, at least one sweet-tasting natural carbohydrate, at least one sweet-tasting sugar alcohol, at least one organic acid and/or at least one flavoring ingredient to the sweetening composition or to a mixture comprising water and the sweetening composition of the present invention. The aforementioned components may also be added to water prior to mixing with the sweetening composition of the present invention. Here, the definitions provided above for thickening agent, sweet-tasting natural carbohydrate, sweet-tasting sugar alcohol, organic acid and flavoring ingredient are applicable as well both in terms of general information and preferred embodiments.

Furthermore, it is also possible that the sweet-tasting natural carbohydrates and/or at least one sweet-tasting sugar alcohol are added to the mixture comprising water and the sweetening composition prior to and/or after the carbonating step, preferably prior to the carbonating step. With the present invention it has been surprisingly found that sweetening compositions containing stevia glycosides are accessible which do not exhibit a slow onset, which do not have a bitter aftertaste and which also do not have a metallic aftertaste. Moreover, it has surprisingly been found that with the sweetening compositions of the present invention an aroma or sweetening profile can be accomplished which resembles that of beverages having been sweetened with natural sugars, even with carbonated beverages. It is, thus, possible with the sweetening composition of the present invention to prepare beverages, in particular carbonated beverages, such as soft drinks and energy drinks which though having a significantly reduced caloric content exhibit an improved sweetness and aroma profile and which in a preferred embodiment also do not differ significantly in their taste from conventional beverages having been sweetened with natural sugars and/or artificial sweeteners. This also includes that a sweetened sensation is perceived by the consumer already at the very beginning. Without being bound by theory, it is believed that this effect is also based on the concomitant use of small amounts of rebaudioside B. In addition, with the sweetening composition of the present invention beverages can be obtained which do not have an insipid or blunt taste or mouthfeel. Interestingly, the above-mentioned advantages are accomplished as long as the relative amounts of rebaudioside A, rebaudioside B and rebaudioside D in the composition of the present invention are used essentially irrespective of the total amount of the sweetening composition of the present invention used with beverages.

The beverages of the present invention comprise, in particular carbonated, soft drinks and energy drinks. Suitable soft drinks also include cola-flavored soft drinks, wherein cola-flavored soft drinks also encompass cola-flavored-type soft drinks.

It is another benefit of sweetening compositions of the present invention that beverages can be obtained which contain natural sugars such as sweet-tasting carbohydrates and/or sweet-tasting sugar alcohols in a very reduced amount. It is possible to reduce the amount of these natural sugars by for example at least 50 wt.-%, preferably by at least 60 wt.-% and more preferably by at least 30 wt.-% vis-à-vis beverages which do not contain the sweetening compositions of the present invention.

And, with the present invention it has been accomplished to provide carbonated low-calorie soft drinks and energy drinks which satisfy the sensoric demands of the consumer while simultaneously complying with the provisions of the Commission Regulation (EU) No. 1131/2011.

The effects obtainable with the sweetening compositions of the present invention were checked by way of blind tastings. A great variety of recipes were tested and subjected to blind tasting by several probands in each case. For each tasting said probands had to evaluate the aroma profile, sweetness, acidity, smell, finish, acerbity and aftertaste (metallic, adstringent, licorice-like).

As reference sample the Red Bull Energy Drink was used. The individual samples were encoded based on ISO 8587:2006. This standard was also used to place a series of test samples in rank order based on the afore-mentioned sensory evaluation. ISO 8587:2006 allows for assessing differences among several samples based on the intensity of a single attribute, of several attributes or on an overall impression. This ISO standard is well established for the sorting of samples and for the determination of the influence on intensity levels of one or more parameters in a consumer tasting. That is, the probands had to examine at least three test samples in an arbitrary sequence. There were in total six tasting flights which were tested by a tasting panel. It was found that, among others, satisfactory results were obtained by carbonated beverages containing a sweetening composition comprising 89 wt-% rebaudioside A, 0.8 wt-% rebaudioside B and 10.2 wt-% rebaudioside D, and also by a sweetening composition comprising 92 wt-% rebaudioside A, 0.8 wt-% rebaudioside B and 7.2 wt-% rebaudioside D as well as by a sweetening composition comprising 86.7 wt-%, rebaudioside A, 0.8 wt-%, rebaudioside B and 12.5 % rebaudioside D. Particularly satisfactory results were obtained in terms of sweetening profile and aroma profile if natural sweet-tasting carbohydrates such as glucose and sucrose were present, however, in significantly reduced amounts compared to the reference sample (preferably not more than 30 wt-% of sugar). It was also found that by addition of organic acids such as malic acid and citric acid the overall taste impression could be improved. The compositions which successfully passed the tasting test did not exhibit a bitter, metallic and licorice-like aftertaste, did not have a delayed onset, provided a comfortable aroma profile and mouthfeel and were essentially indistinguishable from the reference sample, in particular as to its sweetening profile.

## Claims

1. A sweetening composition comprising, in particular consisting of, rebaudioside A, rebaudioside B and rebaudioside D wherein, based on the total weight of rebaudioside A, rebaudioside B and rebaudioside D,
rebaudioside A is present in an amount in the range from 85.0 to 95.0 wt-%, rebaudioside B is present in an amount in the range from 0.2 to 1.2 wt-%, and rebaudioside D is present in an amount in the range from 4.8 to 13.8 wt-%.

2. The sweetening composition according to claim 1, wherein, based on the total weight of rebaudioside A, rebaudioside B and rebaudioside D,
rebaudioside A is present in an amount in the range from 86.0 to 94.3 wt-%, rebaudioside B is present in an amount in the range from 0.3 to 0.9 wt-%, and rebaudioside D is present in an amount in the range from 5.4 to 13.1 wt-%.

3. The sweetening composition according to claim 1 or 2, wherein, based on the total weight of rebaudioside A, rebaudioside B and rebaudioside D,
rebaudioside A is present in an amount in the range from 90.5 to 94.0 wt-%, rebaudioside B is present in amount in the range from 0.2 to 1.0 wt-% and rebaudioside D is present in amount in the range from 5.8 to 8.5 wt-%;
or
wherein, based on the total weight of rebaudioside A, rebaudioside B and rebaudioside D,
rebaudioside A is present in an amount in the range from 90.9 to 94.4 wt-%, rebaudioside B is present in amount in the ra nge from 0.2 to 0.5 wt-% and rebaudioside D is present in amount in the range from 5.4 to 8.6 wt-%;.

4. The sweetening composition according to any of the preceding claims wherein said composition does not contain more rebaudioside C or more rebaudioside E or more rebaudioside F or more stevioside or more dulcoside or more rubusoside or more steviolbioside or more of any other steviol glycoside different from rebaudioside A to F, stevioside, dulcoside, rubusoside and steviolbioside than rebaudioside B
or
wherein said composition contains less rebaudioside C or less rebaudioside E or less rebaudioside F or less stevioside or less dulcoside or less rubusoside or less steviolbioside or less of any other steviolglycoside different from rebaudioside A to F, stevioside, dulcoside, rubusoside and steviolbioside than rebaudioside B,
or
wherein said composition does not contain more of at least two compounds selected from the group consisting of rebaudioside C, rebaudioside E, rebaudioside F, stevioside, dulcoside, rubusoside, steviolbioside and of any other steviolglycoside different from rebaudioside A to F, stevioside, dulcoside, rubusoside and steviolbioside than rebaudioside B
or
wherein said composition contains less of at least two compounds selected from the group consisting of rebaudioside C, rebaudioside E, rebaudioside F, stevioside, dulcoside, rubusoside, steviolbioside and of any other steviolglycoside different from rebaudioside A to F, stevioside, dulcoside, rubusoside and steviolbioside than rebaudioside B
or
wherein said composition does not contain more of rebaudioside C, rebaudioside E, rebaudioside F, stevioside, dulcoside, rubusoside and steviolbioside and of any other steviolglycoside different from rebaudioside A to F, stevioside, dulcoside, rubusoside and steviolbioside than rebaudioside B
or
wherein said composition contains less ofrebaudioside C, rebaudioside E, rebaudioside F, stevioside, dulcoside, rubusoside and steviolbioside and of any other steviolglycoside different from rebaudioside A to F, stevioside, dulcoside, rubusoside and steviolbioside than rebaudioside B.

5. The sweetening composition according to any of the preceding claims **characterized in that** it is essentially free of any sweet-tasting natural carbohydrates and/or **in that** it is essentially free of any sweet-tasting sugar alcohols.

6. The sweetening composition according to any of claims 1 to 4 further comprising at least one natural sweet-tasting carbohydrate, in particular a natural sweet-tasting monosaccharide and/or disaccharide, and/or at least one sweet-tasting sugar alcohol.

7. The sweetening composition according to any of the preceding claims wherein said composition, based on the total weight of rebaudioside A, rebaudioside B and rebaudioside D, does not contain more than 0.1 wt.-% rebaudioside C, rebaudioside E, rebaudioside F, stevioside, dulcoside, rubusoside or steviolbioside or more of any other steviolglycoside different from rebaudioside A to F, stevioside, dulcoside, rubusoside and steviolbioside,
or
wherein said composition, based on the total weight of rebaudioside A, rebaudioside B and rebaudioside D, contains less than 0.1 wt.-% rebaudioside C or less than 0.1 wt.-% rebaudioside E or less than 0.1 wt.-% rebaudioside F or less than 0.1 wt.-% stevioside or less than 0.1 wt.-% dulcoside or less than 0.1 wt.-% rubusoside or less than 0.1 wt.-% steviolbioside or less than 0.1 wt.-% of any other steviolglycoside different from rebaudioside A to F, stevioside, dulcoside, rubusoside and steviolbioside,
or
wherein said composition, based on the total weight of rebaudioside A, rebaudioside B and rebaudioside D, does not contain more than 0.1 wt.-% of at least two compounds selected from the group consisting of rebaudioside C, rebaudioside E, rebaudioside F, stevioside, dulcoside, rubusoside, steviolbioside and of any other steviolglycoside different from rebaudioside A to F, stevioside, dulcoside, rubusoside and steviolbioside
or
wherein said composition, based on the total weight of rebaudioside A, rebaudioside B and rebaudioside D, contains less than 0.1 wt.-% of at least two compounds selected from the group consisting of rebaudioside C, rebaudioside E, rebaudioside F, stevioside, dulcoside, rubusoside, steviolbioside and of any other steviolglycoside different from rebaudioside A to F, stevioside, dulcoside, rubusoside and steviolbioside
or
wherein said composition, based on the total weight of rebaudioside A, rebaudioside B and rebaudioside D, does not contain more than 0.1 wt.-% of rebaudioside C, rebaudioside E, rebaudioside F, stevioside, dulcoside, rubusoside and steviolbioside and of any other steviolglycoside different from rebaudioside A to F, stevioside, dulcoside, rubusoside and steviolbioside
or
wherein said composition, based on the total weight of rebaudioside A, rebaudioside B and rebaudioside D, contains less than 0.1 wt.-% of rebaudioside C, rebaudioside E, rebaudioside F, stevioside, dulcoside, rubusoside and steviolbioside and of any other steviolglycoside different from rebaudioside A to F, stevioside, dulcoside, rubusoside and steviolbioside.

8. The sweetening composition according to claim 6 or 7 wherein the sweet-tasting natural monosaccharide is selected from the group consisting of fructose, glucose, mannose, rhamnose, xylose, tagatose, and galactose, or mixtures thereof, and/or wherein the sweet-tasting natural disaccharide is selected from the group consisting of sucrose, lactose and maltose or mixtures thereof, and/or wherein the sweet-tasting sugar alcohol is selected from the group consisting of erythritol, glycerol, lactitol, maltitol, mannitol, sorbitol, xylitol, and galactitol or mixtures thereof.

9. The sweetening composition according to any of the preceding claims further comprising at least one thickening agent and/or at least one organic acid, in particular malic acid and/or citric acid, or a salt thereof and/or at least one inorganic acid, in particular phosphoric acid, or salt thereof.

10. The sweetening composition according to claim 9, wherein the thickening agent is selected from the group consisting of starch, starch-based thickeners, xanthan, pectin, agar agar, carrageenan, alginic acid and locust bean gum or mixtures thereof, and/or wherein the organic acid is selected from the group consisting of citric acid, malic acid, tartaric acid, fumaric acid, gluconic acid, lactic acid, glycolic acid, mandelic acid, oxalic acid and salicylic acid or mixtures.

11. The sweetening composition according to any of the preceding claims further comprising at least one flavoring ingredient selected from the group consisting of galangal, cocoa, cinnamon, lemon, lemon juice concentrate, coca leaf, orange, orange oil, corn mint, pine, cardamom, mace, clove, lime, lime oil, nutmeg, nutmeg oil, mustard seeds, mustard seed oil, caramel, rosemary, pepper, honey, ginger, vanilla, licorice, licorice extract, cola nut and cola nut extract or mixtures thereof.

12. The sweetening composition according to any of the preceding claims further comprising at least one artificial sweetener, in particular aspartame, sucralose, neotame, alitame, glucin, acesulfame potassium, cyclamate, saccharine or mixtures thereof.

13. The sweetening composition according to any of the preceding claims further comprising further ingredients selected from the group consisting of sodium citrate, glucoronolactone, inositol, at least one vitamin, e.g. niacin, pantothenic acid, vitamin B6, vitamin B12, riboflavin, caustic caramel, caustic sulfite caramel, ammonia caramel, sulfite ammonia caramel and ascorbic acid, or mixtures thereof.

14. The sweetening composition according to any of the preceding claims further comprising taurine and/or caffeine.

15. Use of the sweetening composition of any of claims 1 to 14 for sweetening beverages, in particular soft drinks or energy drinks.

16. Use according to claim 15 wherein the beverage is a carbonated beverage.

17. Use of the sweetening composition of any of claims 1 to 14 for preparing an, in particular carbonated, beverage.

18. Beverage, in particular carbonated beverage, comprising the sweetening composition according to any of claims 1 to 14.

19. Beverage according to claim 18 wherein rebaudioside A, B and D in combination are present in the beverage in a concentration in the range from 0.01 to 1.0 g/l, preferably from 0.05 to 0.75 g/l and more preferably from 0.1 to 0.6 g/l.

20. Beverage according to claim 18 or 19 wherein the sweet-tasting natural carbohydrates and the sweet-tasting sugar alcohols are present in combination in the beverage in a concentration not above 40 g/l, preferably in the range from 5 g/l to 35 g/l and more preferably in the range from 10 g/l to 25 g/l.

21. Beverage according to any of claims 18 to 20 **characterized in that** it is a soft drink, in particular a cola-flavored or cola-flavored-type soft drink, or an energy drink.

22. Process for preparing a beverage according to any of claims 18 to 21 comprising the steps of
a) providing a sweetening composition according to any of claims 1 to 14,
b) providing water and
c) mixing components provided under a) and b).

23. Process according to claim 22 further comprising the step (step d)) of carbonating the beverage.

24. Process according to claim 22 or 23 further comprising the step of adding at least one thickening agent, at least one sweet-tasting natural carbohydrate, at least one sweet-tasting sugar alcohol, at least one organic acid and/or at least one flavoring ingredient to the sweetening composition prior to mixing with water or to a mixture comprising water and the sweetening composition and/or to water prior to mixing with the sweetening composition.

25. Process according to any of claims 22 to 24 wherein the sweet-tasting natural carbohydrates and/or at least one sweet-tasting sugar alcohol, are added to the mixture comprising water and the sweetening composition prior to and/or after the carbonating step.

## Patentansprüche

1. Süßungszusammensetzung, umfassend, insbesondere bestehend aus, Rebaudiosid A, Rebaudiosid B und Rebaudiosid D, wobei, bezogen auf das Gesamtgewicht von Rebaudiosid A, Rebaudiosid B und Rebaudiosid D,
Rebaudiosid A in einer Menge in dem Bereich von 85,0 bis 95,0 Gew.-% vorliegt, Rebaudiosid B in einer Menge in dem Bereich von 0,2 bis 1,2 Gew.-% vorliegt, und Rebaudiosid D in einer Menge in dem Bereich von 4,8 bis 13,8 Gew.-% vorliegt.

2. Süßungszusammensetzung nach Anspruch 1, wobei, bezogen auf das Gesamtgewicht von Rebaudiosid A, Rebaudiosid B und Rebaudiosid D,
Rebaudiosid A in einer Menge in dem Bereich von 86,0 bis 94,3 Gew.-% vorliegt, Rebaudiosid B in einer Menge in dem Bereich von 0,3 bis 0,9 Gew.-% vorliegt, und Rebaudiosid D in einer Menge in dem Bereich von 5,4 bis 13,1 Gew.-% vorliegt.

3. Süßungszusammensetzung nach Anspruch 1 oder 2, wobei, bezogen auf das Gesamtgewicht von Rebaudiosid A, Rebaudiosid B und Rebaudiosid D, Rebaudiosid A in einer Menge in dem Bereich von 90,5 bis 94,0 Gew.-% vorliegt, Rebaudiosid B in einer Menge in dem Bereich von 0,2 bis 1,0 Gew.-% vorliegt und Rebaudiosid D in einer Menge in dem Bereich von 5,8 bis 8,5 Gew.-% vorliegt;
oder
wobei, bezogen auf das Gesamtgewicht von Rebaudiosid A, Rebaudiosid B und Rebaudiosid D,
Rebaudiosid A in einer Menge in dem Bereich von 90,9 bis 94,4 Gew.-% vorliegt, Rebaudiosid B in einer Menge in dem Bereich von 0,2 bis 0,5 Gew.-% vorliegt und Rebaudiosid D in einer Menge in dem Bereich von 5,4 bis 8,6 Gew.-% vorliegt.

4. Süßungszusammensetzung nach einem der vorangehenden Ansprüche, wobei die Zusammensetzung nicht mehr Rebaudiosid C oder nicht mehr Rebaudiosid E oder nicht mehr Rebaudiosid F oder nicht mehr Steviosid oder nicht mehr Dulcosid oder nicht mehr Rubusosid oder nicht mehr Steviolbiosid oder nicht mehr von einem anderen Steviolglykosid, das verschieden von Rebaudiosid A bis F, Steviosid, Dulcosid, Rubusosid und Steviolbiosid ist, als Rebaudiosid B enthält
oder
wobei die Zusammensetzung weniger Rebaudiosid C oder weniger Rebaudiosid E oder weniger Rebaudiosid F oder weniger Steviosid oder weniger Dulcosid oder weniger Rubusosid oder weniger Steviolbiosid oder weniger von einem anderen Steviolglykosid, das verschieden von Rebaudiosid A bis F, Steviosid, Dulcosid, Rubusosid und Steviolbiosid ist, als Rebaudiosid B enthält,
oder
wobei die Zusammensetzung nicht mehr von mindestens zwei Verbindungen, ausgewählt aus der Gruppe bestehend aus Rebaudiosid C, Rebaudiosid E, Rebaudiosid F, Steviosid, Dulcosid, Rubusosid, Steviolbiosid, und von einem anderen Steviolglykosid, das verschieden von Rebaudiosid A bis F, Steviosid, Dulcosid, Rubusosid und Steviolbiosid ist, als Rebaudiosid B enthält
oder
wobei die Zusammensetzung weniger von mindestens zwei Verbindungen, ausgewählt aus der Gruppe bestehend aus Rebaudiosid C, Rebaudiosid E, Rebaudiosid F, Steviosid, Dulcosid, Rubusosid, Steviolbiosid, und von einem anderen Steviolglykosid, das verschieden von Rebaudiosid A bis F, Steviosid, Dulcosid, Rubusosid und Steviolbiosid ist, als Rebaudiosid B enthält
oder
wobei die Zusammensetzung nicht mehr von Rebaudiosid C, Rebaudiosid E, Rebaudiosid F, Steviosid, Dulcosid, Rubusosid und Steviolbiosid und von einem anderen Steviolglykosid, das verschieden von Rebaudiosid A bis F, Steviosid, Dulcosid, Rubusosid und Steviolbiosid ist, als Rebaudiosid B enthält
oder
wobei die Zusammensetzung weniger von Rebaudiosid C, Rebaudiosid E, Rebaudiosid F, Steviosid, Dulcosid, Rubusosid und Steviolbiosid und von einem anderen Steviolglykosid, das verschieden von Rebaudiosid A bis F, Steviosid, Dulcosid, Rubusosid und Steviolbiosid ist, als Rebaudiosid B enthält.

5. Süßungszusammensetzung nach einem der vorangehenden Ansprüche, **gekennzeichnet dadurch, dass** sie im Wesentlichen frei von jeglichen süß schmeckenden natürlichen Kohlenhydraten ist, und/oder dadurch, dass sie im Wesentlichen frei von jeglichen süß schmeckenden Zuckeralkoholen ist.

6. Süßungszusammensetzung nach einem der Ansprüche 1 bis 4, weiterhin umfassend mindestens ein süß schmeckendes natürliches Kohlenhydrat, insbesondere ein süß schmeckendes natürliches Monosaccharid und/oder Disaccharid, und/oder mindestens einen süß schmeckenden Zuckeralkohol.

7. Süßungszusammensetzung nach einem der vorangehenden Ansprüche, wobei die Zusammensetzung, bezogen auf das Gesamtgewicht von Rebaudiosid A, Rebaudiosid B und Rebaudiosid D, nicht mehr als 0,1 Gew.-% Rebaudiosid C, Rebaudiosid E, Rebaudiosid F, Steviosid, Dulcosid, Rubusosid oder Steviolbiosid oder mehr von einem anderen Steviolglykosid, das verschieden von Rebaudiosid A bis F, Steviosid, Dulcosid, Rubusosid und Steviolbiosid ist, enthält,
oder
wobei die Zusammensetzung, bezogen auf das Gesamtgewicht von Rebaudiosid A, Rebaudiosid B und Rebaudiosid D, weniger als 0,1 Gew.-% Rebaudiosid C oder weniger als 0,1 Gew.-% Rebaudiosid E oder weniger als 0,1 Gew.-% Rebaudiosid F oder weniger als 0,1 Gew.-% Steviosid oder weniger als 0,1 Gew.-% Dulcosid oder weniger als 0,1 Gew.-% Rubusosid oder weniger als 0,1 Gew.-% Steviolbiosid oder weniger als 0,1 Gew.-% eines anderen Steviolglykosids, das verschieden von Rebaudiosid A bis F, Steviosid, Dulcosid, Rubusosid und Steviolbiosid ist, enthält, oder
wobei die Zusammensetzung, bezogen auf das Gesamtgewicht von Rebaudiosid A, Rebaudiosid B und Rebaudiosid D, nicht mehr als 0,1 Gew.-% von mindestens zwei Verbindungen, ausgewählt aus der Gruppe bestehend aus Rebaudiosid C, Rebaudiosid E, Rebaudiosid F, Steviosid, Dulcosid, Rubusosid, Steviolbiosid, und von einem anderen Steviolglykosid, das verschieden von Rebaudiosid A bis F, Steviosid, Dulcosid, Rubusosid und Steviolbiosid ist, enthält
oder
wobei die Zusammensetzung, bezogen auf das Gesamtgewicht von Rebaudiosid A, Rebaudiosid B und Rebaudiosid D, weniger als 0,1 Gew.-% von mindestens zwei Verbindungen, ausgewählt aus der Gruppe bestehend aus Rebaudiosid C, Rebaudiosid E, Rebaudiosid F, Steviosid, Dulcosid, Rubusosid, Steviolbiosid, und von einem anderen Steviolglykosid, das verschieden von Rebaudiosid A bis F, Steviosid, Dulcosid, Rubusosid und Steviolbiosid ist, enthält
oder
wobei die Zusammensetzung, bezogen auf das Gesamtgewicht von Rebaudiosid A,
Rebaudiosid B und Rebaudiosid D, nicht mehr als 0,1 Gew.-% von Rebaudiosid C, Rebaudiosid E, Rebaudiosid F, Steviosid, Dulcosid, Rubusosid und Steviolbiosid und von einem anderen Steviolglykosid, das verschieden von Rebaudiosid A bis F, Steviosid, Dulcosid, Rubusosid und Steviolbiosid ist, enthält
oder
wobei die Zusammensetzung, bezogen auf das Gesamtgewicht von Rebaudiosid A, Rebaudiosid B und Rebaudiosid D, weniger als 0,1 Gew.-% von Rebaudiosid C, Rebaudiosid E, Rebaudiosid F, Steviosid, Dulcosid, Rubusosid und Steviolbiosid und von einem anderen Steviolglykosid, das verschieden von Rebaudiosid A bis F, Steviosid, Dulcosid, Rubusosid und Steviolbiosid ist, enthält.

8. Süßungszusammensetzung nach Anspruch 6 oder 7, wobei das süß schmeckende natürliche Monosaccharid ausgewählt ist aus der Gruppe bestehend aus Fructose, Glucose, Mannose, Rhamnose, Xylose, Tagatose und Galactose oder Gemischen davon, und/oder wobei das süß schmeckende natürliche Disaccharid ausgewählt ist aus der Gruppe bestehend aus Saccharose, Lactose und Maltose oder Gemischen davon, und/oder wobei der süß schmeckende Zuckeralkohol ausgewählt ist aus der Gruppe bestehend aus Erythritol, Glycerol, Lactitol, Maltitol, Mannitol, Sorbitol, Xylitol und Galactitol oder Gemischen davon.

9. Süßungszusammensetzung nach einem der vorangehenden Ansprüche, weiterhin umfassend mindestens ein Verdickungsmittel und/oder mindestens eine organische Säure, insbesondere Äpfelsäure und/oder Citronensäure, oder ein Salz davon und/oder mindestens eine anorganische Säure, insbesondere Phosphorsäure, oder ein Salz davon.

10. Süßungszusammensetzung nach Anspruch 9, wobei das Verdickungsmittel ausgewählt ist aus der Gruppe bestehend aus Stärke, Verdickern auf Stärkebasis, Xanthan, Pektin, Agar-Agar, Carrageenan, Alginsäure und Johannisbrotkernmehl oder Gemischen davon, und/oder wobei die organische Säure ausgewählt ist aus der Gruppe bestehend aus Citronensäure, Äpfelsäure, Weinsäure, Fumarsäure, Gluconsäure, Milchsäure, Glykolsäure, Mandelsäure, Oxalsäure und Salicylsäure oder Gemischen.

11. Süßungszusammensetzung nach einem der vorangehenden Ansprüche, weiterhin umfassend mindestens eine geschmacksgebende Zutat, ausgewählt aus der Gruppe bestehend aus Galgant, Kakao, Zimt, Zitrone, Zitronensaftkonzentrat, Kokablatt, Orange, Orangenöl, Ackerminze, Pinie, Kardamom, Muskatblüte, Gewürznelke, Limette, Limettenöl, Muskatnuss, Muskatnussöl, Senfsamen, Senfsamenöl, Karamell, Rosmarin, Pfeffer, Honig, Ingwer, Vanille, Lakritz, Lakritzextrakt, Kolanuss und Kolanussextrakt oder Gemischen davon.

12. Süßungszusammensetzung nach einem der vorangehenden Ansprüche, weiterhin umfassend mindestens ein künstliches Süßungsmittel, insbesondere Aspartam, Sucralose, Neotam, Alitam, Glucin, Acesulfam-Kalium, Cyclamat, Saccharin oder Gemische davon.

13. Süßungszusammensetzung nach einem der vorangehenden Ansprüche, weiterhin umfassend weitere Bestandteile, ausgewählt aus der Gruppe bestehend aus Natriumcitrat, Glucoronolacton, Inositol, mindestens einem Vitamin, z. B. Niacin, Pantothensäure, Vitamin B₆, Vitamin B₁₂, Riboflavin, kaustischer Zuckercouleur, Sulfitlaugen-Zuckercouleur, Ammoniak-Zuckercouleur, Ammoniumsulfit-Zuckercouleur und Ascorbinsäure, oder Gemischen davon.

14. Süßungszusammensetzung nach einem der vorangehenden Ansprüche, weiterhin umfassend Taurin und/oder Coffein.

15. Verwendung der Süßungszusammensetzung nach einem der Ansprüche 1 bis 14 zum Süßen von Getränken, insbesondere Softdrinks oder Energydrinks.

16. Verwendung nach Anspruch 15, wobei das Getränk ein kohlensäurehaltiges Getränk ist.

17. Verwendung der Süßungszusammensetzung nach einem der Ansprüche 1 bis 14 zur Herstellung eines, insbesondere kohlensäurehaltigen, Getränks.

18. Getränk, insbesondere kohlensäurehaltiges Getränk, umfassend die Süßungszusammensetzung nach einem der Ansprüche 1 bis 14.

19. Getränk nach Anspruch 18, wobei Rebaudiosid A, B und D in Kombination in dem Getränk in einer Konzentration in dem Bereich von 0,01 bis 1,0 g/l, vorzugsweise von 0,05 bis 0,75 g/l und stärker bevorzugt von 0,1 bis 0,6 g/l vorliegen.

20. Getränk nach Anspruch 18 oder 19, wobei die süß schmeckenden natürlichen Kohlenhydrate und die süß schmeckenden Zuckeralkohole in Kombination in dem Getränk in einer Konzentration nicht über 40 g/l, vorzugsweise in dem Bereich von 5 g/l bis 35 g/l und stärker bevorzugt in dem Bereich von 10 g/l bis 25 g/l vorliegen.

21. Getränk nach einem der Ansprüche 18 bis 20, **dadurch gekennzeichnet, dass** es ein Softdrink, insbesondere ein Softdrink mit Colageschmack oder ein Softdrink vom Colageschmackstyp, oder ein Energydrink ist.

22. Verfahren zur Herstellung eines Getränks nach einem der Ansprüche 18 bis 21, umfassend die Schritte
a) Bereitstellen einer Süßungszusammensetzung nach einem der Ansprüche 1 bis 14,
b) Bereitstellen von Wasser und
c) Mischen der unter a) und b) bereitgestellten Komponenten.

23. Verfahren nach Anspruch 22, weiterhin umfassend den Schritt (Schritt d)) des Versetzens des Getränks mit Kohlensäure.

24. Verfahren nach Anspruch 22 oder 23, weiterhin umfassend den Schritt des Zugebens von mindestens einem Verdickungsmittel, mindestens einem süß schmeckenden natürlichen Kohlenhydrat, mindestens einem süß schmeckenden Zuckeralkohol, mindestens einer organischen Säure und/oder mindestens einer geschmacksgebenden Zutat zu der Süßungszusammensetzung vor dem Mischen mit Wasser oder zu einem Gemisch, umfassend Wasser und die Süßungszusammensetzung, und/oder zu Wasser vor dem Mischen mit der Süßungszusammensetzung.

25. Verfahren nach einem der Ansprüche 22 bis 24, wobei die süß schmeckenden natürlichen Kohlenhydrate und/oder mindestens ein süß schmeckender Zuckeralkohol zu dem Gemisch, umfassend Wasser und die Süßungszusammensetzung, vor und/oder nach dem Schritt des Versetzens mit Kohlensäure zugegeben werden.

## Revendications

1. Composition d'édulcorant comprenant du, en particulier se composant de, rébaudioside A, rébaudioside B et rébaudioside D,
le rébaudioside A étant présent à une teneur dans la plage de 85,0 à 95,0 % massique, le rébaudioside B étant présent à une teneur dans la plage de 0,2 à 1,2 % massique et le rébaudioside D étant présent à une teneur dans la plage de 4,8 à 13,8 % massique,
basé sur le poids total du rébaudioside A, du rébaudioside B et du rébaudioside D.

2. Composition d'édulcorant selon la revendication 1,
le rébaudioside A étant présent à une teneur dans la plage de 86,0 à 94,3 % massique, le rébaudioside B étant présent à une teneur dans la plage de 0,3 à 0,9 % massique et le rébaudioside D étant présent à une teneur dans la plage de 5,4 à 13,1 % massique,
basé sur le poids total du rébaudioside A, du rébaudioside B et du rébaudioside D.

3. Composition d'édulcorant selon la revendication 1 ou 2,
le rébaudioside A étant présent à une teneur dans la plage de 90,5 à 94,0 % massique, le rébaudioside B étant présent à une teneur dans la plage de 0,2 à 1,0 % massique et le rébaudioside D étant présent à une teneur dans la plage de 5,8 à 8,5 % massique,
basé sur le poids total du rébaudioside A, du rébaudioside B et du rébaudioside D ; ou
le rébaudioside A étant présent à une teneur dans la plage de 90,9 à 94,4 % massique, le rébaudioside B étant présent à une teneur dans la plage de 0,2 à 0,5 % massique et le rébaudioside D étant présent à une teneur dans la plage de 5,4 à 8,6 % massique,
basé sur le poids total du rébaudioside A, du rébaudioside B et du rébaudioside D.

4. Composition d'édulcorant selon l'une quelconque des revendication précédentes,
ladite composition ne contenant pas plus de rébaudioside C ou plus de rébaudioside E ou plus de rébaudioside F ou plus de stévioside ou plus de dulcoside ou plus de rubusoside ou plus de stéviolbioside ou plus d'un quelconque autre glycoside de stéviol différent du rébaudioside A à F, stévioside, dulcoside, rubusoside et stéviolbioside que le rébaudioside B, ou
ladite composition contenant moins de rébaudioside C ou moins de rébaudioside E ou moins de rébaudioside F ou moins de stévioside ou moins de dulcoside ou moins de rubusoside ou moins de stéviolbioside ou moins d'un quelconque autre glycoside de stéviol différent du rébaudioside A à F, stévioside, dulcoside, rubusoside et stéviolbioside que le rébaudioside B, ou
ladite composition ne contenant pas plus d'au moins deux composés sélectionnés parmi le groupe se composant de rébaudioside C, rébaudioside E, rébaudioside F, stévioside, dulcoside, rubusoside, stéviolbioside et d'un quelconque autre glycoside de stéviol différent du rébaudioside A à F, stévioside, dulcoside, rubusoside et stéviolbioside que le rébaudioside B, ou
ladite composition contenant moins d'au moins deux composés sélectionnés parmi le groupe se composant de rébaudioside C, rébaudioside E, rébaudioside F, stévioside, dulcoside, rubusoside, stéviolbioside et d'un quelconque autre glycoside de stéviol différent du rébaudioside A à F, stévioside, dulcoside, rubusoside et stéviolbioside que le rébaudioside B,
ou
ladite composition ne contenant pas plus de rébaudioside C, rébaudioside E, rébaudioside F, stévioside, dulcoside, rubusoside et stéviolbioside et d'un quelconque autre glycoside de stéviol différent du rébaudioside A à F, stévioside, dulcoside, rubusoside et stéviolbioside que le rébaudioside B, ou
ladite composition contenant moins de rébaudioside C, rébaudioside E, rébaudioside F, stévioside, dulcoside, rubusoside et stéviolbioside et d'un quelconque autre glycoside de stéviol différent du rébaudioside A à F, stévioside, dulcoside, rubusoside et stéviolbioside que le rébaudioside B.

5. Composition d'édulcorant selon l'une quelconque des revendications précédentes **caractérisée en ce qu'**elle est essentiellement dépourvue de tout glucide naturel au goût sucré et/ou **en ce qu'**elle est essentiellement dépourvue de tout polyol au goût sucré.

6. Composition d'édulcorant selon l'une quelconque des revendications 1 à 4 comprenant en outre au moins un glucide naturel au goût sucré, en particulier un monosaccharide et/ou un diholoside au goût sucré naturel(s), et/ou au moins un polyol au goût sucré.

7. Composition d'édulcorant selon l'une quelconque des revendications précédentes, ladite composition ne contenant pas plus de 0,1 % massique de rébaudioside C, rébaudioside E, rébaudioside F, stévioside, dulcoside, rubusoside ou stéviolbioside, ou plus d'un quelconque autre glycoside de stéviol différent du rébaudioside A à F, stévioside, dulcoside, rubusoside et stéviolbioside, basé sur le poids total du rébaudioside A, du rébaudioside B et du rébaudioside D,
ou
ladite composition contenant moins de 0,1 % massique de rébaudioside C, ou moins de 0,1 % massique de rébaudioside E, ou moins de 0,1 % massique de rébaudioside F, ou moins de 0,1 % massique de stévioside, ou moins de 0,1 % massique de dulcoside, ou moins de 0,1 % massique de rubusoside, ou moins de 0,1 % massique de stéviolbioside, ou moins de 0,1 % massique d'un quelconque autre glycoside de stéviol différent du rébaudioside A à F, stévioside, dulcoside, rubusoside et stéviolbioside, basé sur le poids total du rébaudioside A, du rébaudioside B et du rébaudioside D,
ou
ladite composition ne contenant pas plus de 0,1 % massique d'au moins deux composés sélectionnés parmi le groupe se composant de rébaudioside C, rébaudioside E, rébaudioside F, stévioside, dulcoside, rubusoside, stéviolbioside et d'un quelconque autre glycoside de stéviol différent du rébaudioside A à F, stévioside, dulcoside, rubusoside et stéviolbioside, basé sur le poids total du rébaudioside A, du rébaudioside B et du rébaudioside D,
ou
ladite composition contenant moins de 0,1 % massique d'au moins deux composés sélectionnés parmi le groupe se composant de rébaudioside C, rébaudioside E, rébaudioside F, stévioside, dulcoside, rubusoside, stéviolbioside et d'un quelconque autre glycoside de stéviol différent du rébaudioside A à F, stévioside, dulcoside, rubusoside et stéviolbioside, basé sur le poids total du rébaudioside A, du rébaudioside B et du rébaudioside D,
ou
ladite composition ne contenant pas plus de 0,1 % massique de rébaudioside C, rébaudioside E, rébaudioside F, stévioside, dulcoside, rubusoside et stéviolbioside et d'un quelconque autre glycoside de stéviol différent du rébaudioside A à F, stévioside, dulcoside, rubusoside et stéviolbioside, basé sur le poids total du rébaudioside A, du rébaudioside B et du rébaudioside D, ou
ladite composition contenant moins de 0,1 % massique de rébaudioside C, rébaudioside E, rébaudioside F, stévioside, dulcoside, rubusoside et stéviolbioside et d'un quelconque autre glycoside de stéviol différent du rébaudioside A à F, stévioside, dulcoside, rubusoside et stéviolbioside, basé sur le poids total du rébaudioside A, du rébaudioside B et du rébaudioside D.

8. Composition d'édulcorant selon la revendication 6 ou 7, le monosaccharide naturel au goût sucré étant sélectionné parmi le groupe se composant de fructose, glucose, mannose, rhamnose, xylose, tagatose et galactose, ou de mélanges de ceux-ci, et/ou le diholoside naturel au goût sucré étant sélectionné parmi le groupe se composant de sucrose, lactose et maltose ou de mélanges de ceux-ci, et/ou le polyol au goût sucré étant sélectionné parmi le groupe se composant d'érythritol, glycérol, lactitol, maltitol, mannitol, sorbitol, xylitol et galactitol ou de mélanges de ceux-ci.

9. Composition d'édulcorant selon l'une quelconque des revendications précédentes, comprenant en outre au moins un agent épaississant et/ou au moins un acide organique, en particulier l'acide malique et/ou l'acide citrique, ou un sel de ceux-ci et/ou au moins un acide inorganique, en particulier l'acide phosphorique, ou un sel de ceux-ci.

10. Composition d'édulcorant selon la revendication 9, l'agent épaississant étant sélectionné parmi le groupe se composant d'amidon, épaississants à base d'amidon, xanthane, pectine, agar agar, carraghénane, acide alginique et gomme de caroube ou de mélanges de ceux-ci, et/ou l'acide organique étant sélectionné parmi le groupe se composant d'acide citrique, acide malique, acide tartrique, acide fumarique, acide gluconique, acide lactique, acide glycolique, acide mandélique, acide oxalique et acide salicylique ou de mélanges.

11. Composition d'édulcorant selon l'une quelconque des revendications précédentes, comprenant en outre au moins un ingrédient aromatisant sélectionné parmi le groupe se composant de galangal, cacao, cannelle, citron, concentré de jus de citron, feuille de coca, orange, essence d'écorce d'orange, menthe des champs, pin, cardamome, macis, clou de girofle, citron vert, essence de citron vert, noix de muscade, huile essentielle de noix de muscade, graines de moutarde, huile de graine de moutarde, caramel, romarin, poivre, miel, gingembre, vanille, réglisse, extrait de réglisse, noix de cola et extrait de noix de cola, ou de mélanges de ceux-ci.

12. Composition d'édulcorant selon l'une quelconque des revendications précédentes, comprenant en outre au moins un édulcorant artificiel, en particulier aspartame, sucralose, néotame, alitame, glucin, acésulfame potassium, cyclamate, saccharine, ou des mélanges de ceux-ci.

13. Composition d'édulcorant selon l'une quelconque des revendications précédentes, comprenant en outre des ingrédients sélectionnés parmi le groupe se composant de citrate de sodium, glucoronolactone, inositol, au moins une vitamine, par exemple niacine, acide pantothénique, vitamine B6, vitamine B12, riboflavine, caramel ordinaire, caramel de sulfite caustique, caramel ammoniacal, caramel au sulfite d'ammonium et acide ascorbique, ou des mélanges de ceux-ci.

14. Composition d'édulcorant selon l'une quelconque des revendications précédentes, comprenant en outre de la taurine et/ou de la caféine.

15. Utilisation de la composition d'édulcorant selon l'une quelconque des revendications 1 à 14, pour édulcorer des boissons, en particulier des boissons rafraîchissantes ou des boissons énergisantes.

16. Utilisation selon la revendication 15, la boisson étant une boisson gazeuse.

17. Utilisation de la composition d'édulcorant selon l'une quelconque des revendications 1 à 14 pour préparer une boisson, en particulier gazeuse.

18. Boisson, en particulier boisson gazeuse, comprenant la composition d'édulcorant selon l'une quelconque des revendications 1 à 14.

19. Boisson selon la revendication 18, le rébaudioside A, B et D en combinaison étant présents dans la boisson à une concentration dans la plage de 0,01 à 1,0 g/l, de préférence de 0,05 à 0,75 g/l, et plus préférablement de 0,1 à 0,6 g/l.

20. Boisson selon la revendication 18 ou 19, les glucides naturels au goût sucré et les polyols au goût sucré étant présents en combinaison dans la boisson à une concentration ne dépassant pas 40 g/l, de préférence dans la plage de 5 g/l à 35 g/l, et plus préférablement dans la plage de 10 g/l à 25 g/l.

21. Boisson selon l'une quelconque des revendications 18 à 20, **caractérisée en ce qu'**elle est une boisson rafraîchissante, en particulier une boisson rafraîchissante aromatisée au cola ou de type aromatisée au cola, ou une boisson énergisante.

22. Procédé pour préparer une boisson selon l'une quelconque des revendications 18 à 21, comprenant les étapes de
a) fournir une composition d'édulcorant selon l'une quelconque des revendications 1 à 14,
b) fournir de l'eau et
c) mélanger des composants fournis aux points a) et b).

23. Procédé selon la revendication 22, comprenant en outre l'étape (étape d)) de gazéifier la boisson.

24. Procédé selon la revendication 22 ou 23, comprenant en outre l'étape d'ajouter au moins un épaississant, au moins un glucide naturel au goût sucré, au moins un polyol au goût sucré, au moins un acide organique et/ou au moins un ingrédient aromatisant à la composition d'édulcorant avant de mélanger avec de l'eau ou à un mélange comprenant de l'eau et la composition d'édulcorant et/ou à de l'eau avant de mélanger avec la composition d'édulcorant.

25. Procédé selon l'une quelconque des revendications 22 à 24, les glucides naturels au goût sucré et/ou au moins un polyol au goût sucré étant ajoutés au mélange comprenant de l'eau et la composition d'édulcorant avant et/ou après l'étape de gazéification.
